# EUROPEAN PATENT SPECIFICATION

(11) **EP 1 477 382 B1**
(45) Date of publication and mention of the grant of the patent: **24.06.2009**
(21) Application number: 04075755.1
(22) Date of filing: 08.03.2004
(51) Int. Cl.: B61H 7/08, H02K 49/04

(54) **Electrically operable magnetic rail brake device**
elektrisch bedienbare magnetische Schienenfahrzeugbremse
frein magnétique sur rail à commande électrique

(30) Priority: 10.03.2003 NL 1022885
(43) Date of publication of application: 17.11.2004
(73) Proprietor: Walker Europe Holding BV, 5531 AD Bladel (NL)
(72) Inventor: Luijten, Cornelis Theodurus Petrus Maria, Leende (NL)
(74) Representative: Kupecz, Arpad

(56) References cited:
- EP-A1- 0 716 970
- WO-A1-97/12795
- DE-A1- 10 008 052
- DE-A1- 19 619 409
- DE-A1- 19 943 091

## Description

The invention relates to an electrically operable magnetic rail brake device for magnetically cooperating in a braking state with a rail of magnetisable material and incorporating:
- a magnetic circuit comprising soft-magnetic material,
- coil means of electrically conducting material for generating an electromagnetic field when an electric current flows therethrough,
- switchable magnetisable core means belonging to the magnetic circuit and located within the coil means, and
- a working area to be directed to a rail,
where in the braking state, as a result of the coil means being passed through by an electric current, a magnetic brake field is switched on which extends beyond the working area and can be closed via the rail. A rail brake device of this type is known, for example, from EP 0 575 935 B1.

Brake devices which magnetically mate with a rail of magnetisable material are used for example in track vehicles such as railway carriages or tramcars, but may in principle also be used in other applications such as, for example, lift cages, hoisting apparatus which can be moved over rails etc.

Various kinds of brake systems are used in rail carriages. A rough subdivision can be made into brake systems that depend on a power transmission between the wheels of the carriage and the rails and brake systems that directly contact the rail, what are called rail brake devices. For the systems that depend on a power transmission between the wheels and the rails it holds that the braking action is determined by the product of the weight of the railway carriage and the coefficient of friction between the wheels and the rails. When this maximum braking force is exceeded, the wheels will slip and wear locally as the case may be. Subsequent machining of the wheels to restore in them the desired roundness is costly and causes the railway carriage to be out of service. The shortest braking distance that can be achieved is determined by the braking force at which the wheels start to slip. Especially in cases where stiff requirements are made on the braking distance, magnetic rail brake devices are therefore additionally applied. In this respect transport of passengers at high speeds may be thought of or transport of passengers in a town, for example by trams or underground.

Magnetic rail brake devices are advantageous in that the braking action directly contacts the rail and is proportional to the force to be reached magnetically. In addition to magnetic rail brake devices there are also brake devices in which the force between brake and rail is introduced mechanically. However, the disadvantage of this is that this force is subtracted from the weight of the carriage per wheel and thus from the braking action of the wheels. These brake devices are in essence only applicable as a parking brake. For use in emergency brake situations the value is practically equal to zero.

As regards magnetic rail brake devices, two types are known. In one type the rail brake device is lowered onto the rail by means provided for this purpose and then put into operation. The magnetic attraction between the magnet and the rail, together with the coefficient of friction, is decisive for the maximum braking force that can be reached. In a second type of rail brake devices braking is effected by means of reaction forces that are caused by eddy currents induced into the rails. In this type of rail brake devices there is in principle a narrow air gap between the working area of the rail brake device and the rail surface cooperating therewith. This type of rail brake devices thus works contactless in principle and is only suitable in practice for use in highspeed trains. The braking force is dependent on the speed of the carriage.

The two rail brake devices can be arranged as an electrically excitable rail brake device and as a permanent magnetic rail brake device. A difference between these two versions is that after the rail brake device has been put into operation, the electromagnetic rail brake is to be supplied with electric energy over the entire braking distance, an electric current, that is, running through the coil means, so as to maintain the magnetic field and thus the desired braking force. Electrically excitable rail brake devices therefore need to have a back-up system to provide in case of power failure of the main supply line that the magnetic braking field is retained. In permanent magnetic rail brake devices, compare for example

EP 0 716 970 B1, a permanent magnetic braking field is present so that no back-up system is needed. An additional advantage is that this type of rail brake devices can also be used as parking brakes.

A second difference between electrically excitable magnetic rail brake devices and permanent-magnet rail brake devices is that for electrically excitable rail brake devices a limited maximum permissible duty cycle is to be reckoned with as a result of the heat that is generated by the required electric currents in the coil means. Consequently, the ohmic resistance of the rail brake device will increase, the currents will decrease and the magnetic performance will slowly diminish. When the maximum permissible duty cycle is exceeded, the development of heat then occurring can become so great that even a reduction of the useful life of the rail brake device is imminent.

Despite the advantages of permanent magnetic rail brake devices, yet the electrically excitable rail brake device is used most in practice due to the simplicity of construction and the minimum required construction volume. Permanent-magnet rail brake devices require rather complicated means that can be operated mechanically and/or electrically for making such a modification of the mutual arrangement of elements in the magnetic circuit of the rail brake device that a magnetic braking field arises that extends beyond the working area of the rail brake device.

In practice usually not much space for installing the rail brake devices is left between the wheels of the railway carriage, so that the rail brake device is to have a small construction volume. Permanent-magnet rail brake devices need to have a change-over mechanism for the operation, which mechanism itself has such a volume that in many cases it is hard to be built-in or cannot be built-in at all.

Two kinds of permanent-magnet rail brake devices are present on the market nowadays, which are mutually distinguished by the manner in which the permanent magnet is operated. With the one kind this is effected by shifting a magnet section by means of two pneumatic cylinders which are installed over the rail brake device. With the other kind a magnet core is rotated by means of a switching mechanism which is installed on the head-end side of the rail brake device. In the latter kind of rail brake device the permanent magnet itself generally has a more compact construction than the former kind. However, the location of the mechanism is at the expense of the length of the magnet and thus of the braking force. So in the two kinds of permanent-magnet rail brake devices movable parts are thus present which are subject to wear and take up space. The operation of the mechanism may take place electrically.

The invention has an electrically operable magnetic rail brake device of the type mentioned in the opening paragraph having for an object electrically operable magnetic rail brake devices with considerable advantages over the known electrically operable magnetic rail brake devices, more particularly as regards a compact building volume and a simple drive, but also with other important advantages still to be discussed. For this purpose the invention has for an object:
- that the switchable core means comprise hard-magnetic material,
- that as a result of at least one electric magnetization pulse of suitable duration and force passing through the coil means the switchable core means are permanently magnetisable up to a permanent magnetizing state and
- that the magnetic brake field comprises a permanent magnetic brake field which is provided by the switchable core means in the permanent magnetizing state.

By utilizing electrically switchable core means containing hard-magnetic material, a completely new kind of electrically operable magnetic rail brake device is created that combines the advantages of the known electrically operable magnetic rail brake devices and permanent-magnet rail brake devices. The coil means are not used for exciting the rail brake device, but exclusively for the change-over thereof. Different from the known permanent-magnet rail brake devices, this change-over is effected without moving parts. Thus there is no wear and the useful life is practically unlimited. Despite the fact that the new rail brake device according to the invention is electrically operable, it can also be used as a parking brake and no power loss due to heat development during operation occurs. Even so, the disadvantages of the permanent-magnet rail brake device are absent, that is, the large construction volume and the loss of space owing to the switching mechanism.

The rail brake device according to the invention has means for operating one or more electric coils incorporated in the interior, which coils are connected by one or more conductors to connection terminals and can be supplied with current. The coil means generate a magnetic field strength that is sufficiently large to magnetize the hard-magnetic-material core means installed inside the coil means. So the coil need not lastingly be supplied with power, so that an emergency power supply can be applied that can be dimensioned smaller. The rail brake device becomes less warm than the known electrically operable rail brake device as a result of the limited duty cycle of the coil means. Thus, during the braking action the magnetic braking field does not degrade owing to heat development in the rail brake device.

After the magnetic current pulse the rail brake device according to the invention has the character of a permanent magnetic rail brake and can be utilized as a parking brake. A train carriage or a tram car or underground car can therefore be parked for un unlimited amount of time while the rail brake device is switched on, without any need for a power supply.

In this embodiment the switchable core means are demagnetized in the non-braking state. Demagnetization can take place, for example, by means of a suitable sequence of electrical demagnetizing current pulses of varying polarity and decreasing amplitude passing through the coil means.

Claim 2 relates to a suitable embodiment of the rail brake device according to the invention. The free ends of the side-pole parts may be provided with wear parts, as required, made for example of nodular cast iron as is known from the state of the art. The rail brake device has a simple structure, a minimum number of components and small construction volume. The core means are magnetized by a short-duration (of the order of 0.5 second) magnetizing current pulse. After this the core means are permanently magnetic. To put the rail brake device out of operation again, the core means are to be demagnetized, which can be effected by a sequence of decreasing-strength alternating-polarity magnetizing current pulses.

Claim 3 relates to an embodiment of the invention offering even more ad vantages. In this embodiment are also present, besides the switchable core means of hard-magnetic material, lasting permanent magnetic means which generate a lasting permanent magnetic field. The length and the magnetic properties of the material of the permanent magnetic means are selected such that the magnetization current pulse that is necessary for magnetizing the hard-magnetic material of the core means does not affect the lasting permanent magnetic means. This requires that with equal length (seen in the direction of magnetization), the coercive field strength of the lasting permanent magnetic material is significantly larger than that of the hard-magnetic material of the switchable core means. If the length, seen in the direction of magnetization of the lasting permanent magnetic means, is selected shorter, the difference of coercive force should be accordingly larger to guarantee proper operation of the lasting permanent magnetic means.

An important advantage of a rail brake device according to the latter embodiment is that the switchable core means can be arranged as a reversible version in two opposite directions of polarity, where in the one direction of polarity the operation of the lasting permanent magnetic means is counteracted and in the other direction of polarity the operation thereof is raised and the permanent magnetic brake field is generated, which extends beyond the working area. Thus demagnetization of the switchable core means is not necessary, only a reversal is. This means a simplification of the electrical drive of the coil means. The braking action is not only enhanced by the switchable core means, but also the lasting permanent magnetic means. The volume of the switchable core means thus needs to be less large, for example by approximation so large that the switchable core and the lasting permanent magnetic means produce an equal portion of the field energy.

The latter embodiment offers a completely new kind of rail brake device that comprises both switchable core means that contain hard-magnetic material and lasting permanent magnetic means that generate a lasting permanent magnetic field. Based on this concept, a number of interesting further embodiments are possible.

Claim 4, for example, relates to a possible embodiment comprising a magnetic circuit which in essence in cross section has the form of a U, the lasting permanent magnetic means being accommodated in the space that is present between the legs of the U.

Claim 5 relates to another embodiment where the lasting permanent magnetic means are split into two and are found on the side of the connecting part of the U, above the soft-magnetic means. The field between these lasting permanent magnetic means can be shorted via the cover means, which in this case consist of magnetisable material. This embodiment has a plurality of advantages. The lasting permanent magnetic material is located far from the working area of the rail brake device where heat is developed during the braking process. There are no magnetic stray fields present above the cover means, irrespective of the condition of the rail brake device. Thus the rail brake device can be installed closer to the steel parts of a carriage. On the side of the lasting permanent magnetic means, however, there are stray fields. Variants to these embodiments are possible, where the total length of lasting permanent magnetic material can be divided in different degrees over the first and second lasting permanent magnetic means. The limit situation too where either of the two lasting permanent magnetic means would have a length equal to zero can be practically arranged and can offer advantages since in that case a stray field is present on one side only.

Claim 6 relates to yet another embodiment. In this embodiment the magnetic circuit also has a U-shaped cross section and the hard-magnetic core means are divided into two. Thus, first and second core means are present, each having its own coil means. The total length of switchable hard-magnetic material may be larger in this embodiment. This length is the determining factor for the maximum number of ampere windings to be achieved. More length thus implies a larger magnetic field and a larger braking force. This may justify the additional cost of the presence of two coils.

Claim 7 relates to yet another variant. In this case the magnetic circuit has an E-shaped cross section. A magnetic circuit is employed having three poles that extend all in longitudinal direction as far as the working area of the rail brake device. In this variant of the rail brake device according to the invention hardly any stray fields extend outside the rail brake device.

Claim 8 relates to yet another embodiment that is suitable for cooperating with a remote surface of the rail by the generation of eddy currents. The purpose of the configuration described in this claim is the contactless braking by means of eddy currents generated in the rail. By analogy with the foregoing, several variants are possible with the aid of electrically connected core means of hard-magnetic material. The cover means of soft-magnetic material can together form a single cover. Variants are also possible in which magnetic circuits are arranged behind one another in the longitudinal direction in that short modules are positioned one behind the other in accordance with one of the embodiments discussed earlier. All embodiments of rail brake devices comprising a row of several magnetic circuits arranged one behind the other can also be arranged for direct frictional contact with the rails and can be used as a parking brake.

Also the embodiment of the invention as claimed in claim 9 relates to an embodiment that is suitable for cooperating with a remote surface of the rail by the generation of eddy currents. However, in this case use is made of individual rail brake devices, each comprising their own switchable core means, possibly permanent magnetic means, coil means etc., a required number of which being arranged behind one another by mechanical mutual coupling in longitudinal direction. The individual rail brake devices may be identical or not in mechanical structure and can be constructed, tested, stored etc. as individual units in advance.

According to claim 10 the hard-magnetic material of the switchable core means in the permanent magnetizing state possesses a coercive field strength that exceeds 35 kA/m. The lasting permanent magnetic means have a coercive field strength of significantly higher value. The hard-magnetic material of the switchable core means may consist of for example Alnico 600 having a coercivity HcB > 48 kA/m (or 600 Oersted) and energy contents (BH) max > 38 kJ/m3 (or 4.8 MgsOe). This material can be obtained from for example Cibas S.r.l. Milan, Italy.

The embodiment as claimed in claim 11 is advantageous for use in the rail brake device in countries where ice formation on the exterior of the rail brake device may be feared.

A preferred embodiment is described in claim 12 where the external contour of the cross section of the rail brake device is suitable to install in most customary rail carriages.

Interesting because of its simplicity is also a rail brake device as claimed in claim 13. For moving the rail brake device from a position of rest at a distance from the rail to the braking position in which there is frictional contact with the rail, no special operating means are necessary. The electrical current pulse that is necessary for the operation of the rail brake device is also used for its movement to the braking position. The return movement is caused by the spring suspension.

Also important is the embodiment as claimed in claim 14. In this embodiment an extra strong braking action can be obtained in cases of emergency by temporarily using the rail brake device according to the invention both as a permanent magnetic rail brake device and at the same time as an electrically powered magnetic rail brake device.

The invention also comprises a arrangement as claimed in claim 15 movable along one or more rails. Particularly a rail carriage according to the invention such as a carriage of a train, a tram-car or underground car has great advantages, because it can be well braked by means of the rail brake device, is provided with a parking brake that does not need any energy in parking condition, can be additionally braked in case of emergency etc. in dependence on the design of the rail brake device present.

The invention will now be further explained with reference to a non-limiting description of a number of advantageous embodiments of the invention in which the drawings will be referred to. In the drawings:
Fig. 1 shows a cross section of a first embodiment of a rail brake device according to the invention having a U-shaped magnetic circuit, covered by a non-magnetic cover, not comprising lasting permanent magnetic means and brake shoes which, in the braking state, directly abut on a rail,
Fig. 1B shows the same sectional view as Fig. 1A where symbolically the course and polarity direction are shown of the magnetic field in the braking state of the rail brake device,
Figs. 2A and 2B are sectional views of a variant of the rail brake device as shown in Figs. 1A and 1B now comprising indeed lasting permanent magnetic means where in Fig. 2A the course and direction of the magnetic field are shown in the non-active state of the rail brake device and in Fig. 2B the course and the direction of the magnetic field are shown in the braking state,
Fig. 2C shows a broken-away view in longitudinal section of a rail brake device as shown in Fig. 2A and Fig. 2B,
Figs. 3A and 3B are similar views to those in Figs. 2A and 2B of another embodiment of the invention,
Figs. 4A and 4B are similar views to those in Figs. 2A and 2B of yet another embodiment of the invention,
Figs. 5A and 5B are similar views to those in Figs. 2A and 2B of still another embodiment of the invention,
Figs. 6A and 6B are views in longitudinal section at a different scale from the preceding Figures of an embodiment of the invention comprising a plurality of identical magnetic circuits positioned one behind the other at a small distance over a rail,
Fig. 6C shows a cross-section through one of the magnetic circuits of the device shown in Figs. 6A and 6B,
Fig. 7 shows a cross-section similar to Figs. 6A-6B of an embodiment of the invention comprising a plurality of individual mechanically coupled rail brake devices positioned one behind the other at a small distance over a rail,
Figs. 8 and 9 show cross sections along the arrows VIII-VIII and IX-IX respectively in Fig. 7, and
Fig. 10 is a graph of the complete magnetic hysterisis curve of a switchable hard-magnetic material that is suitable for the invention.

In the Figures relating to the same embodiment of the invention like reference numerals are used for like components.

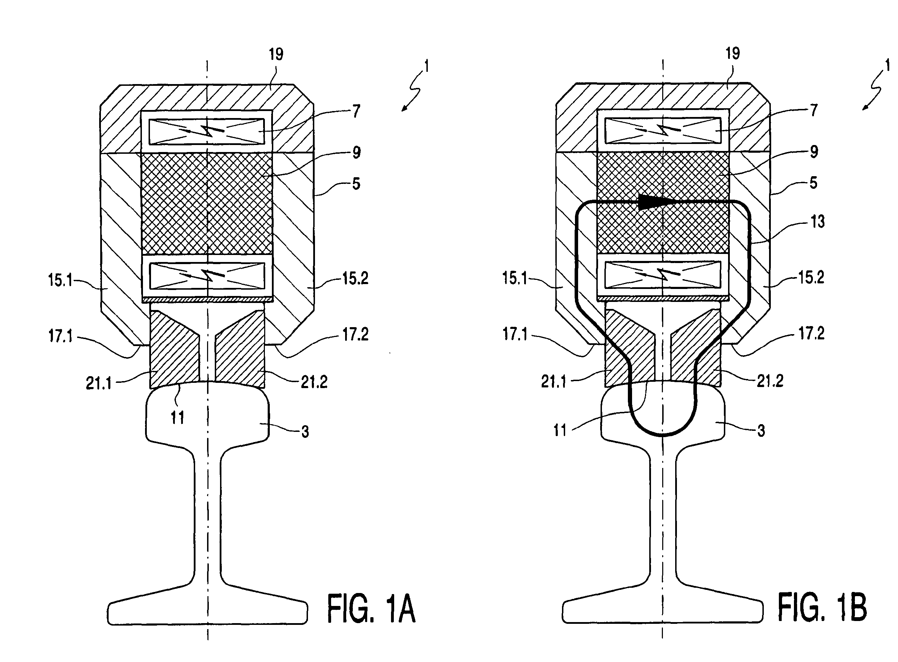

The simplest embodiment of the invention from a point of view of construction will be explained with reference to Figs. 1A and 1B.

Figs. 1A and 1B show an electrically operable magnetic rail brake device 1 which is arranged for magnetically cooperating in a braking state shown in Fig. 1B with a rail 3 of magnetisable material, more particularly of steel. The magnetizing device 1 comprises a magnetic circuit of soft-magnetic material bearing the general reference number 5. Coil means 7 schematically shown in cross section are present in the form of a coil of electrically conducting material such as insulated copper wire for generating an electromagnetic field when an electrical current passes through the coil. The coil 7 is only shown schematically. The coil 7 further comprises switchable magnetic core means 9 belonging to the magnetic circuit 5, in the embodiment shown the circuit 5 comprising soft-magnetic material. Finally, the rail brake device comprises a working area 11 to be turned to the rail 3. In the braking state a magnetic field is switched on in that the coil means 7 are passed through by an electrical current coming from a current source (not shown), which magnetic field extends to beyond the working area and can be closed via the rail 3. Fig. 1B symbolically shows by means of the closed loop 13 indicated by an arrow how the magnetic field extends through the core means, through the magnetic circuit of the rail brake device and through the upper part of the rail 3, roughly in a certain current direction through the coil 7 and thus in a certain magnetizing direction of the core means 9. For simplicity the position of the rail brake device in Fig. 1A is shown the same as in Fig. 1B, although in Fig. 1A there is in essence no mention of a braking state and thus, in general, the working area 11 of the rail brake device will be at some distance over the rail 3.

In contrast to the rail brake devices known from the prior art the core means 9 contain hard-magnetic material, in the case shown the coil means even completely consist of hard-magnetic material. As a result of at least an electrical magnetizing pulse of suitable duration and strength passing through the coil means 7, the core means 9 can be permanently magnetized up to a permanent magnetizing state. The braking state shown in Fig. 1B is thus maintained after the electrical current pulse even if there is no more current flowing through the coil mans 7. As a result of at least an electrical demagnetizing current pulse of suitable duration and strength and reverse polarity passing through the coil means 7, the switchable core means 9 can in essence be demagnetized again up to a demagnetizing state as shown in Fig. 1A in which there is no permanent magnetic field present within the magnetic circuit 5 of the rail brake device and no magnetic brake field is present that extends to beyond the working area. Thus the magnetic brake field in the rail brake device according to the invention comprises a permanent magnetic brake field that is provided by the switchable core means 9 in the permanent magnetizing state. Both for the magnetization and demagnetization of the core means 9 of hard-magnetic material more than one current pulse can be used. Particularly during demagnetization a rapid demagnetization can occur by giving a series of current pulses of diminishing amplitude and opposite polarity, where at least the first current pulse is a demagnetizing current pulse, but one or more subsequent current pulses of smaller amplitude can work in the direction of magnetization. These kind of techniques are known to the expert in the relevant field and will therefore not be discussed any further.

Figs. 1A and 1B show a suitable construction of the rail brake device discussed. The magnetic circuit 5 in essence has the form of a U in cross-section where the connecting part of the U comprises the core means 9 of hard-magnetic material and supports the coil means 7 and the upright parts of the U form abutting on soft-magnetic side-pole parts 15.1 and 15.2. The part of the coil means 7 situated opposite the free ends 17.1 and 17.2 of the side-pole parts 15.1 and 15.2 is covered by cover means 19 of non-magnetic material, for example either reinforced plastic, aluminium etc. or not. In the embodiment shown the cover means 19 have the form of an elongated cover extending over the complete rail brake device. Brake shoes 21.1 and 21.2 respectively made of a suitable material for example of nodular cast iron as known from the state of the art are installed at the ends 17.1 and 17.2 of the respective side-pole parts 15.1 and 15.2. The brake shoes are preferably arranged to be exchangeable so that they can be replaced in case of excessive wear.

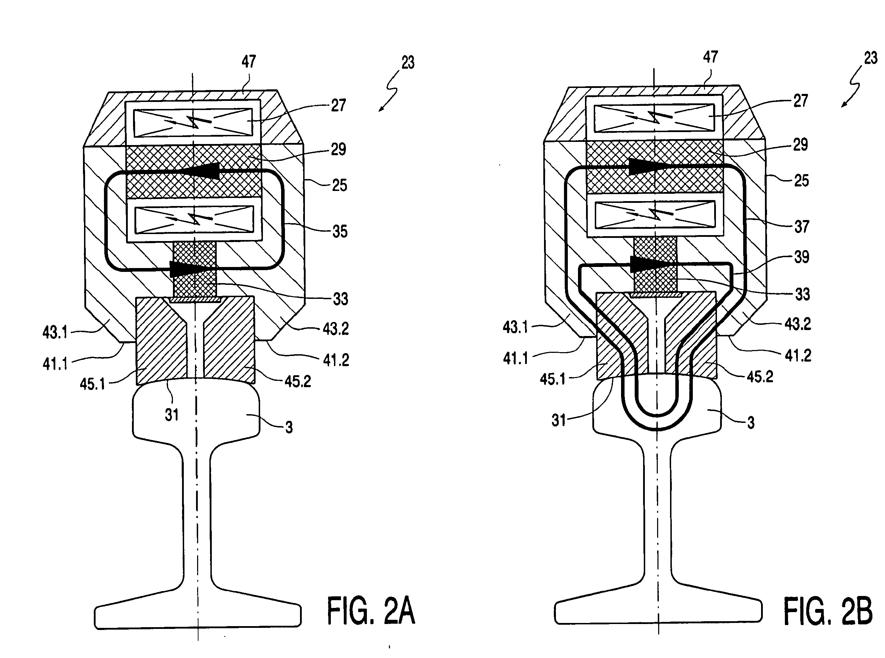

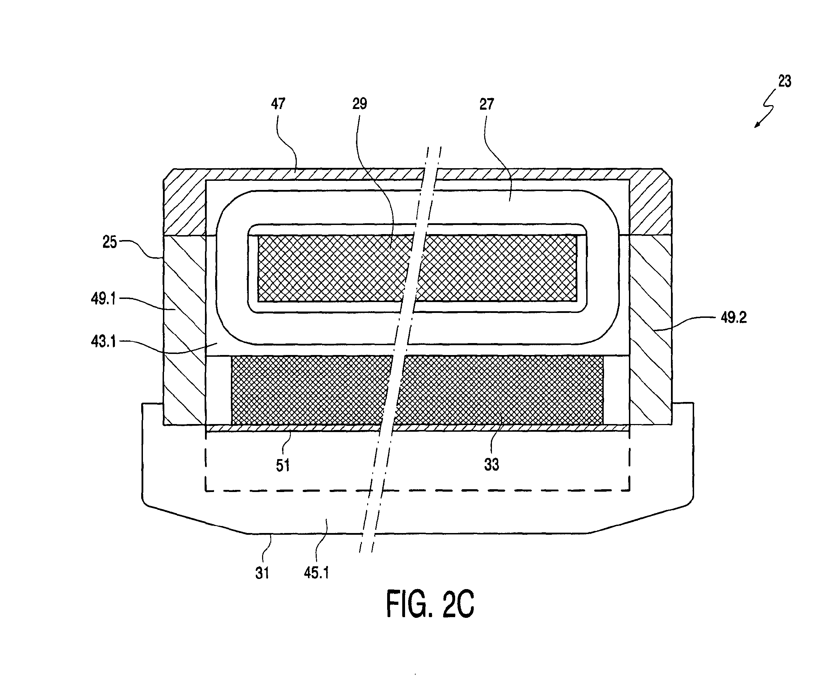

In the embodiment of the invention as shown in Fig. 1 the brake field is completely provided by the core means 7 in the permanent magnetizing state. In the following Figures will be discussed embodiments of the invention in which part of the permanent magnetic brake field is not only produced by the switchable hard-magnetic core means but also present within the rail brake device as a result of permanent magnetic means. A first embodiment of this type is shown in Figs. 2A, 2B and 2C. These Figures show a rail brake device 23, which in many aspects shows a strong similarity to the rail brake device as shown in Figs. 1A and 1B. The rail brake device cooperates with the rail 3 and comprises a magnetic circuit 25, coil means 27 and core means 29. At the bottom there is a working area 31 for frictional contact with the rail 3. Further are present lasting permanent magnetic means 33, which generate a permanent magnetic field having a certain magnetic polarity. Fig. 2A symbolically shows in the closed curve 35 with the arrows included therein that in the sectional plane that is shown in the drawing the lasting permanent magnetic field of the lasting permanent magnetic means 33 is directed from left to right. As a result of a current pulse of suitable strength and duration and, moreover, in this case of suitable polarity by the coil means 27 the permanent magnetic state of the switchable core means 29 can be reversed between a first magnetic pole direction as shown in Fig. 2A and a second, opposite magnetic pole direction which is symbolized in Fig. 2B by the closed curve 37 and the arrow included therein. In the embodiment according to the invention as shown in Figs. 2A, 2B and 2C, the switchable core means 29 of hard-magnetic material are thus not switched between a magnetizing state and a demagnetizing state but between a magnetizing state in one direction and a magnetizing state in the opposite direction. In Fig. 2A the first magnetic polarity direction is shown of the magnetization direction of the switchable core means 29, which is opposite to the polarity of the permanent magnetic means. In this way a magnetically closed loop 35 which does not extend to beyond the brake surface 31 of the rail brake device arises within the magnetic circuit 25. In the second magnetic polarity direction of the core means 29 the situation of Fig. 2B develops. In this case the magnetic fields of the permanent magnetic means 29 and 33 are mutually amplifying. As a result the magnetic field of the permanent magnetic means 33 approximately run as symbolized by the closed curve 39 which extends to beyond the working area 31, just like the permanent magnetic field symbolized by the curve 37 of the permanent magnetic core means 29. The magnetic core means 29 and also the core means 27 in the embodiment of the invention as shown in Figs. 2A to 2C can be designed smaller than in the embodiment as shown in Figs. 1A and 1B, because part of the permanent magnetic braking force is produced by the permanent magnetic means 33.

In this case too the magnetic circuit 25 in cross sectional view in essence has a U with a connecting part and adjacent upright parts having a free end 41.1 and 41.2 respectively. The connecting part of the U comprises the core means 29 of hard-magnetic material and supports the coil means 27. The upright parts of the U comprise soft-magnetic side-pole parts 43.1 and 43.2 which abut on the core means 29 and have free ends 41.1 and 41.2 respectively. Just like in the embodiment as shown in Figs. 1A and 1B brake shoes referred to as 45.1 and 45.2 are again installed near the free ends of the side-pole parts. The lasting permanent magnetic means 33 are located between the side-pole parts 43.1 and 43.2 and beside the coil means 27. The part of the coil means 27 located opposite to the free ends 41.1 and 41.2 of the side-pole parts 43.1 and 43.2 respectively is again covered by cover means 47 of non-magnetisable material.

Fig. 2C shows a broken-away view in longitudinal section of the rail brake device as shown in Figs. 2A and 2B. The magnetic circuit 23 can comprise, for example, soft-magnetic parts welded together among which two short side walls 49.1 and 49.2. The hard-magnetic material core 29 is located within the coil means 27 and thus cannot extend completely as far as the short side walls 49.1 and 49.2. The working area of the rail brake device, however, is not shorter than the total length of the rail brake device because the magnetic flux spreads in axial direction through the soft-magnetic parts. For practical reasons the lasting permanent magnetic means 33 do not run as far as the short side walls 49.1 and 49.2. The bottom of the rail brake device is sealed by a cover plate 51 of preferably non-magnetic material such as austenitic stainless steel or aluminium which can be welded or glued to the side-pole parts 43.1 and 43.2 and to the short side walls 49.1 and 49.2. The cover means 47 are formed by an elongated non-magnetisable cover such as plastic either reinforced or not, aluminium etc.

The following Figures relate to embodiments that may be considered modifications of the embodiments already discussed, more particularly of the embodiment as shown in Figs. 2A to 2C because of the presence of lasting permanent magnetic means. To avoid redundant repetition, these embodiments will be discussed in a brief manner hereinafter. The core means may then be indicated as core, coil means as coil and the lasting permanent magnetic means as the permanent magnet without this being meant as a restriction to the invention.

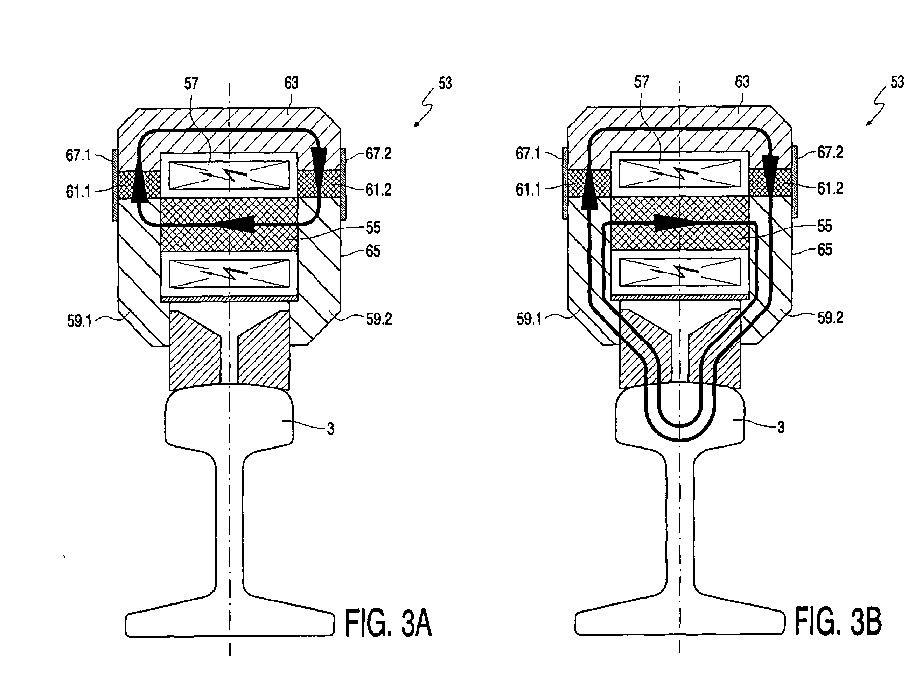

Figs. 3A and 3B show a rail brake device 53 with again in essence the form of a U in cross-sectional view. The connecting part is formed by the core 55, which supports the coil 57. On either one of the two sides of the core 55 soft-magnetic side-pole parts 59.1 and 59.2 are present. The lasting permanent magnetic means comprise a first permanent magnet 61.1 and a second permanent magnet 61.2 which are located near to the ends of the side-pole parts 59.1 and 59.2 on either one of the two sides of the coil 57 and are connected to the connecting part of the U. The first and second permanent magnets 61.1 have opposite polarity directions, in essence parallel to the direction of the side-pole parts. The connecting part of the U-shaped magnetic circuit 53 in this embodiment comprises the cover 63 abutting on the first and second permanent magnets 61.1 and 61.2, which cover forms part of the magnetic circuit 65 of the rail brake device and is therefore made of magnetisable material. The cover 63 covers both the permanent magnets 61.1 and 61.2 and the upper part of the coil 57. Since the cover 63 forms part of the magnetic circuit, a highly compact construction is possible whereas, nevertheless, a considerable permanent-magnet brake field can be produced by the combination of the permanent magnets 61.1 and 61.2 and the permanent-magnetized core 56. The cover 63 is fixedly connected to the side-pole parts 59.1 and 59.2 respectively by means of strips 67.1 and 67.2 running along either one of the two sides of the cover 63. These strips are made of non-magnetisable material so as to avoid the permanent magnets 61.1 and 61.2 short-circuiting. The result is that on the side, at the point of the permanent magnets, stray fields occur outside the rail brake device.

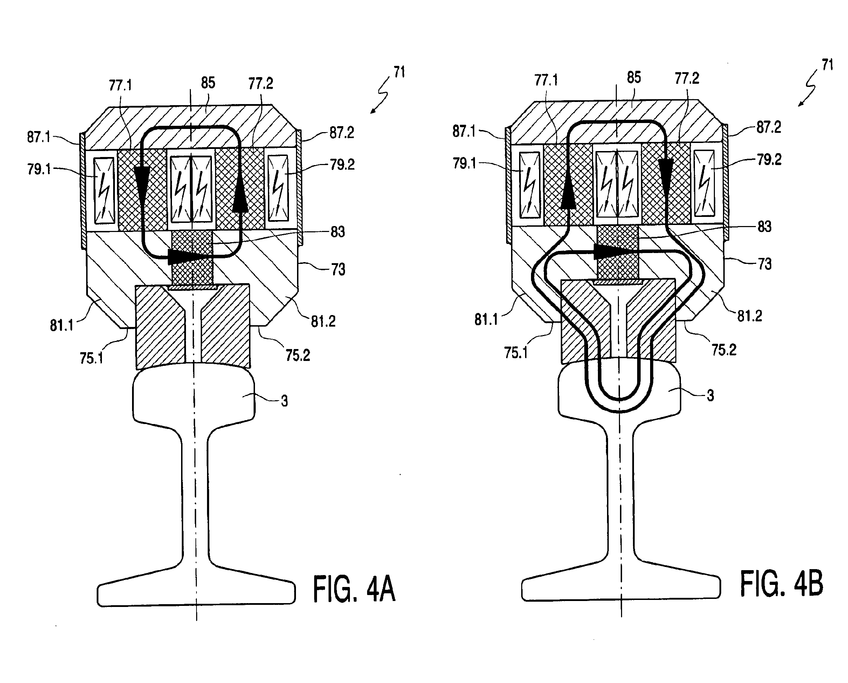

Figs. 4A and 4B show an embodiment in which, compared with the Figs. 2A and 2B the core is subdivided into two cores. These Figures show a rail brake device 71 comprising a magnetic circuit 73 having again in essence in cross sectional view the form of a U with a connecting piece and two abutting side pieces with free ends 75.1 and 75.2 respectively. The core means of hard-magnetic material comprise a first core 77.1 and a second core 77.2 and the coil means comprise a first coil 79.1 wound around the core 77.1 and a second coil 79.2 which is wound around the core 77.2. The upright parts of the U comprise soft-magnetic side-pole parts 81.1 and 81.2 abutting on the cores, as well as the cores 77.1 and 77.2 extend in essence as a continuation of the respective side-pole parts 81.1 and 81.2, at the top thereof. A single permanent magnet 83 is present between the side-pole parts 81.1 and 81.2. The connecting part of the U forms a cover 85 just like Figs. 3A and 3B, which cover forms part of the magnetic circuit 73 and thus consists of magnetisable material. The connection of the cover 85 to the side-pole parts 81.1 and 81.2 can be effected by means of strips 87.1 and 87.2 respectively of non-magnetisable material attached to the sides.

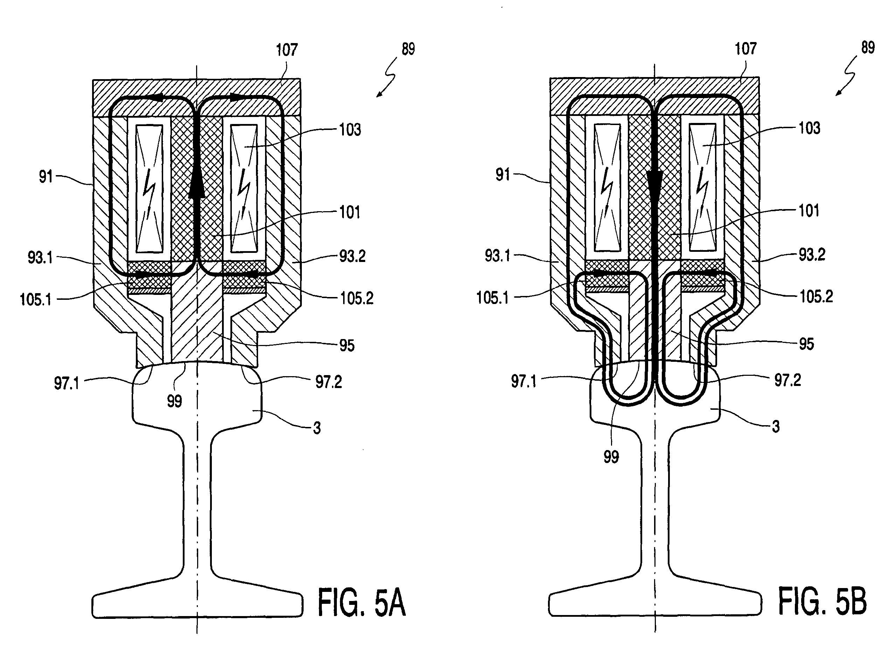

The embodiment of the invention as shown in Figs. 5A and 5B relates to a rail brake device 89 for which the magnetic circuit 91, in essence, has the form of an E in cross-sectional view with an intermediate part, two abutting side parts and a central part stretching out in between. The side parts of the E consist of the soft-magnetic side-pole parts 93.1 and 93.2 respectively and the intermediate part consists of a soft-magnetic middle-pole part 95. The side-pole parts consist of free ends 97.1 and 97.2 respectively and the middle-pole part 95 has a free end 99. The combination of these ends forms the working area of the rail brake device. As an extension and a continuation of the middle-pole part 95 on the side opposite to the free end 99 is the core 101 of switchable hard-magnetic material around which the coil 103 is wound. The lasting permanent magnetic means comprise a first permanent magnet 105.1 and a second permanent magnet 105.2 on either one of the two sides of the middle-pole part 95, each time between the middle-pole part and a respective side-pole part 93.1 and 93.2. The connecting part of the E is formed by cover means shaped like a magnetisable-material cover plate 107 abutting on the side-pole parts 93.1, 93.2 and the core 101, which plate forms part of the magnetic circuit 91 of the rail brake device and is located on top of the part of the coil means 103 opposite to the free end 99 of the middle-pole part 95 to cover these coil means 103. Needless to observe that in this embodiment too, exchangeable wear parts can be used for cooperating with the rail.

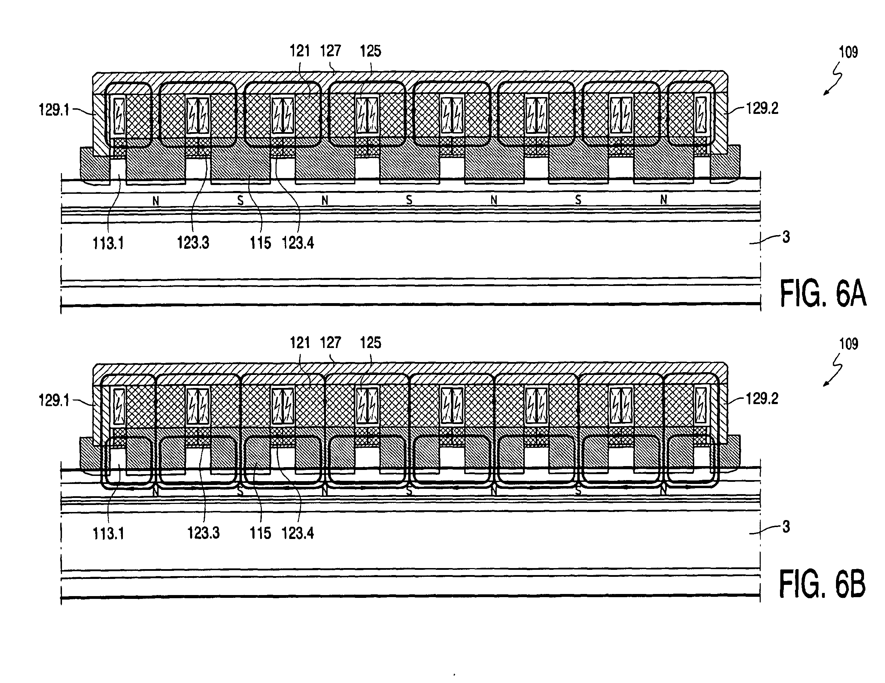

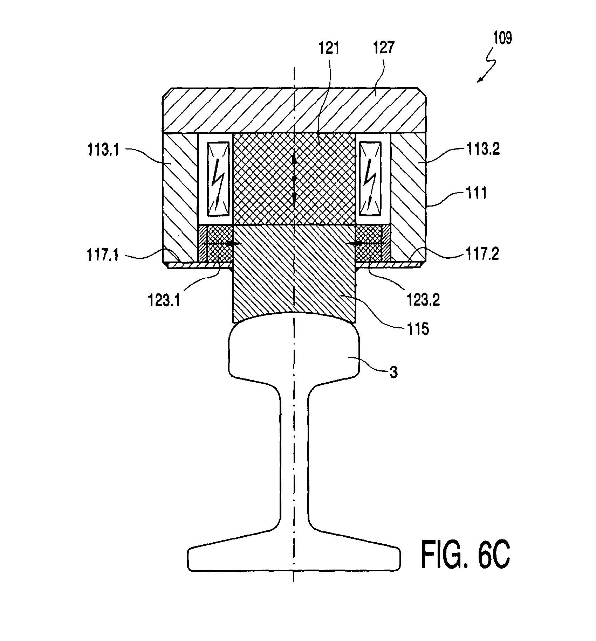

The rail brake device 109 as shown in Figs 6A to 6C is of a type that is suitable for contactless cooperating with the rail 3 by the generation of eddy currents in the rail. The rail brake device 109 comprises a row of a plurality of magnetic circuits 111 which are identical in the embodiment shown, mutually coupled both mechanically and magnetically arranged behind one another in longitudinal direction. The structure of the magnetic rail brake device 109 will first be discussed with reference to the section VI-VI according to Fig. 6B through the centre of one of the magnetic circuits 111, see Fig. 6C. In a cross-sectional view the magnetic circuit 111 in essence has the form of an E with two side parts having a free end and a intermediate part extending in between. The side parts of the E form soft-magnetic side-pole parts 113.1 and 113.2 and the intermediate part forms a soft-magnetic middle-pole part 115. The side-pole parts 113.1 and 113.2 have free ends 117.1 and 117.2 and the middle-pole part 115 has one free end 119 that extends to beyond the free ends 117.1 and 117.2. This free end 119 forms a partial working area of the joint working area of the rail brake device. Abutting on and as an extension to each middle-pole part 115 is a core 121 within a coil 125, which core 121 is located on the side opposite to the free end 119. The lasting permanent magnetic means surround the middle-pole parts 115. For example, the magnetic circuit that is shown in a sectional view in Fig. 6C has four permanent magnets 123.1 and 123.2, see Fig. 6C, as well as 123.3 and 123.4, see Fig. 6B. In this case the middle-pole part 115 is surrounded by four separate permanent magnets.

The permanent magnets such as the permanent magnets 123.1 to 123.4 surround the various middle-pole parts 115, in the row of magnetic circuits the permanent magnetic field generated by the permanent magnets alternately being directed inwardly to the centre of a middle-pole part 115 and radially outwardly from the center of the middle-pole part. The intermediate part of the E of each one of the various magnetic circuits 111 comprises cover means 127 in the form of a cover plate 127 of magnetisable material abutting on the side-pole parts 113.1 and 113.2 and on the core 121, which cover plate covers the coil parts 125 located opposite to the free ends of the relevant middle-pole parts 115. From Figs. 6A, 6B may be noticed that the rail brake device also comprises closing short side walls 129.1 and 129.2 respectively which consist of magnetisable material and abut on the side-pole parts 113.1 and 113.2 shared by all magnetic circuits. These short sidewalls each form a part of the magnetic circuit with the nearest core 121.

The various coils 125 arranged behind one another in longitudinal direction, see Figs. 6A and 6B, can be switched alternately in opposite directions. In one of the magnetic polarity directions of the switchable core means develops the situation of Fig. 6A in which a plurality of in essence closed permanent magnetic fields are present which in essence extend within the row of magnetic circuits 111. In the other magnetic polarity direction, see Fig. 6B, a row of magnetic brake fields is present which extend beyond the working area 119 and as far as to within the rail 3.

In the above description of the rail brake device 109 as shown in Figs. 6A to 6C magnetic circuits are thought of having middle-pole parts 115 of square or rectangular section, around which four permanent magnets 123.1 to 123.4 are grouped. Such a shape is well-adapted to the block shape which the rail brake device in its totality has, so that a maximum amount of permanent magnetic material can be used. In principle, annularly closed permanent magnets such as for example square-shaped or rectangularly-shaped or having a different shape could also be thought of in lieu of separate permanent magnets.

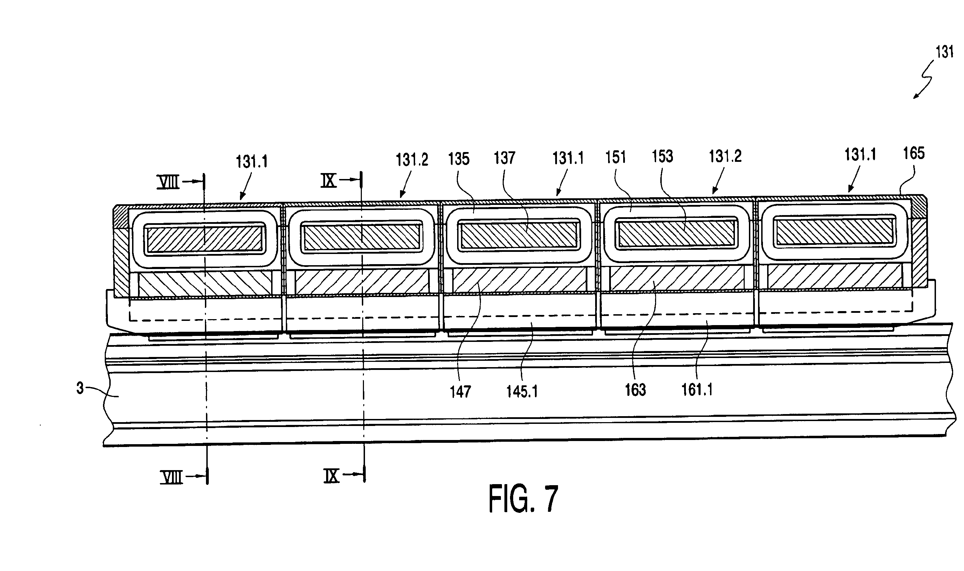

The rail brake device 133 as shown in Figs. 7-9 is also of the type that is suitable for cooperating in a contactless manner with the rail 3 by the generation of eddy currents in the rail. The rail brake device 131 in this case comprises a row of five mutually mechanically coupled but not magnetically coupled individual rail brake devices arranged behind one another in longitudinal direction, alternately indicated by 131.1 and 131.2. These individual rail brake devices are essentially the same from a mechanical point of view, but the lastingly permanent magnetic means are alternately oppositely polarized.

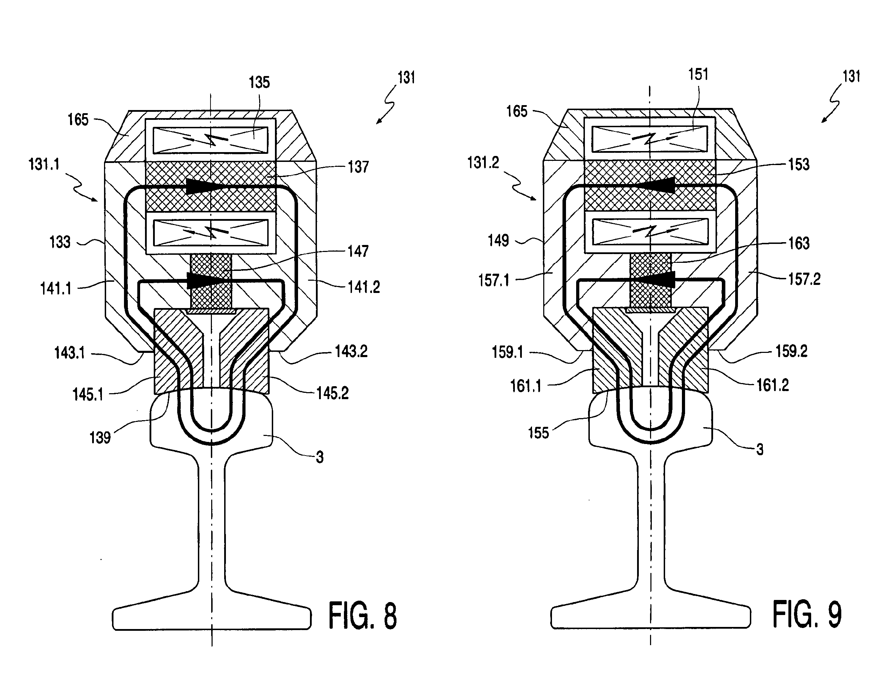

Fig. 8 shows a cross-sectional view along the arrows VIII-VIII in Fig. 7 of an individual rail brake device 131.1. The structure is equal to that of Figs. 2A-2B and comprises a magnetic circuit 133, coil means 135, core means 137, a working area 139, side-pole parts 141.1 and 141.2 having free ends 143.1 and 143.2 respectively, brake shoes 145.1 and 145.2 and lasting permanent magnetic means in the form of a permanent magnet 147 which is magnetized from left to right in the plane of the drawing. The corresponding parts of the section IX-IX shown in Fig. 9 of an individual rail brake device 131.2 are indicated by the reference numerals 149, 153, 155, 157.1-157.2, 159.1-159.2, 161.1-161.2 and 163 respectively. The permanent magnet 163 is magnetized in a direction opposite to the permanent magnet 147 shown in Fig. 8. The operation of the individual rail brake devices 131.1 and 131.2 will not be further explained; with respect to these rail brake devices reference is made to the explanation of Figs. 2A-2B.

The rail brake device 131 is covered in its entirety by a single cover extending over all individual rail brake devices 131.1 and 131.2. Plates of non-magnetisable suitable metal for the purposes of sealing, mutual connection for example by welding etc. are present between the individual rail brake devices on the bottom side thereof, on the sides and at the ends of the whole, which plates are not further shown in Fig. 7.

The total length of a rail brake device as shown in for example Figs. 2A to 2C or Fig. 7 may be for example 1200 to 1300 mm, with a height of about 160 mm and a width of about 130 mm.

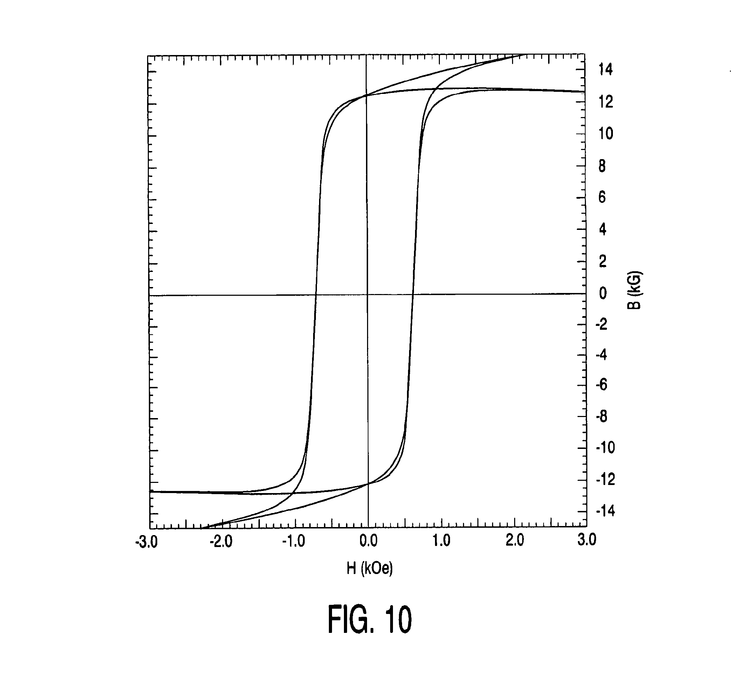

Finally, Fig. 10 shows an example of the complete magnetic hysterisis curve of a hard-magnetic material that is suitable for the switchable permanent magnetic means of the various embodiments of the invention. The material is Alnico 600 which satisfies the characteristic features of claim 10. The Figure represents the connection between the magnetic induction B in kGauss (vertical axis) and the magnetic fieldstrength H in kOe (horizontal axis). In the same Figure is shown the magnetization of the magnetic material. The Figure shows for the material a magnetization of 12.6 kGauss or 1.26 Tesla and a coercive fieldstrength of .6 kOe or 48 kA/m.

Although this is not mentioned with each embodiment of the invention that is shown in a drawing and discussed in the description, there is always a sealing plate similar to the sealing plate 51 of Fig. 2C present to seal the bottom side of the rail brake devices.

In the above the invention has been explained with reference to a number of embodiments of rail brake devices to which the invention, however, is by no means restricted. In contrst, the invention extends to any possible embodiment within the scope of independent claims 1 and 15. The reference symbols in the various claims do not have any other purpose than referring to non-limiting examples of the invention, which are shown in the drawing to enhance the clarity of the claim.

## Claims

1. An electrically operable magnetic rail brake device (1; 23; 53; 71; 89; 109; 131) for magnetically cooperating in a braking state with a rail (3) of magnetisable material and incorporating:
• a magnetic circuit (5; 25; 65; 73; 91; 111; 133; 149) comprising soft-magnetic material,
• coil means (7; 27; 57; 79.1, 79.2; 103; 125; 135; 151) of electrically conducting material for generating an electromagnetic field when an electric current flows therethrough,
• switchable magnetisable core means (9; 29; 55; 77.1, 77.2; 101; 121; 137; 153) belonging to the magnetic circuit and located within the coil means (7; 27; 57; 79.1, 79.2; 103; 125; 135; 151), and
• a working area (11; 31; 97.1, 97.2, 99; 119; 139; 155) to be directed to a rail (3),
where in the braking state, as a result of the coil means (7; 27; 57; 79.1, 79.2; 103; 125; 135; 151) being passed through by an electric current, a magnetic brake field is switched on which extends beyond the working area (11; 31; 97.1, 97.2, 99; 119; 139; 155) and can be closed via the rail (3), **characterized by**
• the switchable core means (9; 29; 55; 77.1, 77.2; 101; 121; 137; 153) comprising hard-magnetic material,
• as a result of at least one electric magnetization pulse of suitable duration and force passing through the coil means (7; 27; 57; 79.1, 79.2; 103; 125; 135; 151), the switchable core means (9; 29; 55; 77.1, 77.2; 101; 121; 137; 153) being permanently magnetisable up to a permanent magnetizing state and
• the magnetic brake field comprising a permanent magnetic brake field which is provided by the switchable core means (9; 29; 55; 77.1, 77.2; 101; 121; 137; 153) in the permanent magnetizing state.

2. A rail brake device as claimed in claim 1, **characterized by**
• the magnetic circuit (5) in cross-sectional view in essence having the shape of a U,
• the connecting piece of the U comprising the core means (9) of hard-magnetic material and supporting the coil means (7),
• the side pieces of the U forming soft-magnetic side-pole parts (15.1, 15.2) abutting on the core means (9), and
• the part of the coil means (7) located opposite to the free ends of the side-pole parts (15.1, 15.2) being covered by cover means (19) of non-magnetisable material. [Figs. 1A - B]

3. A rail brake device (23; 53; 71; 89; 109; 131) as claimed in claim 1, **characterized by**
• the rail brake device also comprising lasting permanent magnetic means (33; 61.2, 61.2; 83; 105.1, 105.2; 123.1, 123.2, 123.3, 123.4) which generate a lasting permanent magnetic field having a given magnetic polarity,
• the permanent magnetic state of the switchable core means (29; 55; 77.1, 77.2; 101; 121; 137; 153) being capable of reversing between a first magnetic polarity direction and a second, opposite, magnetic polarity direction as a result of current pulses of suitable electrical polarity through the coil means (27; 57; 79.1, 79.2; 103; 125; 135; 151) and
• a closed permanent magnetic field is present in one of the magnetic polarity directions of the switchable core means (29; 55; 77.1, 77.2; 101; 121; 137; 153), which permanent magnetic field in essence exclusively extends within the magnetic circuit (25; 65; 73; 91; 111; 133; 149) and in the other magnetic polarity direction the permanent magnetic brake field is provided that extends beyond the working area (31; 97.1, 97.2, 99; 119; 139; 155).

4. A rail brake device (23) as claimed in claim 3,
**characterized by**
• the magnetic circuit (25) in a cross-sectional view having the shape of a U with a connecting part and abutting side parts with a free end (41.1, 41.2),
• the connecting part of the U comprising the core means (29) of hard-magnetic material and supporting the core means,
• the side parts of the U forming soft-magnetic side-pole parts (43.1, 43.2) that abut on the core means,
• the lasting permanent magnetic means (33) being located between the side-pole parts (43.1, 43.2) and beside the core means (27) and
• the part of the core means located opposite to the free ends (41.1, 41.2) of the side-pole parts (43.1, 43.2) being covered by cover means (47) of non-magnetisable material. [Figs. 2A - C]

5. A rail brake device (53) as claimed in claim 3,
**characterized by**
• the magnetic circuit in cross-sectional view in essence having the shape of a U with a connecting part and two abutting side parts with a free end,
• the connecting piece of the U comprising the core means (55) of hard-magnetic material and the coil means (57),
• the side parts of the U forming soft-magnetic side-pole parts (59.1, 59.2) that abut on the core means (55),
• the lasting permanent magnetic means comprising first and second lasting permanent magnetic means (61.1, 61.2) which are located at the ends of the side-pole parts (59.1, 59.2) connected to the connecting part, which side-pole parts being located on either one of the two sides of the coil means (57),
• the first and second lasting permanent magnetic means (61.1, 61.2) having opposite polarity directions in essence parallel with the direction of the side-pole parts and
• the intermediate part of the U comprising cover means (63) of magnetisable material which abut on the first and second lasting permanent magnetic means (61.1, 61.2), which cover the part of the coil means (57) located opposite to the free ends (69.1, 69.2) of the side-pole parts (59.1, 59.2). [Figs. 3A - B]

6. A rail brake device (71) as claimed in claim 3,
**characterized by**
• the magnetic circuit (73) in cross-sectional view having the shape of a U with a connecting part and two abutting side parts with a free end (75.1, 75.2),
• the core means comprising first and second core means (77.1, 77.2) of hard-magnetic material,
• the coil means comprising first and second coil means (79.1, 79.2) supported by the first and second core means respectively,
• the side parts of the U forming each a soft-magnetic side-pole part (81.1, 81.2) that abuts on one of the two core means,
• the core means (77.1, 77.2) extending each in essence in a continuation of a side-pole part (81.1, 81.2),
• the lasting permanent magnetic means (83) extending between the side-pole parts (81.1, 81.2) and
• the intermediate part of the U comprising cover means of magnetisable material which abut on the first and second core means (85), which cover means cover parts of the two coil means (79.1, 79.2) located opposite to the free ends (75.1, 75.2) of the side-pole parts. [Figs. 4A - B]

7. A rail brake device (89) as claimed in claim 3,
**characterized by**
• the magnetic circuit (91) in cross-sectional view in essence having the shape of an E with a intermediate part, two abutting side parts with a free end (97.1, 97.2) and one middle part extending therebetween with a free end (99),
• the side parts of the E forming soft-magnetic side-pole parts (93.1, 93.2),
• the intermediate part of the E comprising a soft-magnetic middle-pole part (95),
• the core means (101) of hard-magnetic material, abutting on and in a continuation of the middle-pole part (95) and on the side opposite to the free end (99), being present in the form of a core that supports the coil means (103),
• the lasting permanent magnetic means comprising first and second lasting permanent magnetic means (105.1, 105.2) on either one of the two sides of the middle-pole part (95), each time between the middle-pole part (95) and a side-pole part (93.1, 93.2) and
• the intermediate part of the E comprising cover means (107) of magnetisable material, which abuts on the side-pole parts (93.1, 93.2) and on the core (101), which cover means cover the part of the coil means located opposite to the free end (99) of the middle-pole part (95). [Figs. 5A - B]

8. A rail brake device (109) as claimed in claim 3 of a type suitable for cooperation of the working area with a surface of the rail (3) separated by an air gap by the generation of eddy currents in the rail, **characterized by**
• the rail brake device (109) comprising a row of a plurality of in essence identical, mutually mechanically and magnetically coupled magnetic circuits (111) arranged one behind the other in longitudinal direction,
• each of the plurality of the magnetic circuits (111) in cross sectional view in essence having the shape of an E with an intermediate part, two abutting side parts with a free end (117.1, 117.2) and a middle part extending therebetween, with a free end (119) which extends as far as the free ends (117.1, 117.2) of the side parts,
• the side parts of each E forming soft-magnetic side pole parts (113.1, 113.2),
• the middle part of each E comprising a soft-magnetic middle-pole part (115) which forms a partial working area at the free end (119),
• the partial working areas of the various E's together forming the working area of the rail brake device,
• core means (121) of hard-magnetic material, abutting on and as a continuation of each middle-pole part (115) and on the side opposite to the free end (119), being present in the form of a core that supports coil means (125),
• the lasting permanent magnetic means (123.1, 123.2, 123.3, 123.4) surrounding the various middle pole parts (115), in the row of magnetic circuits the permanent magnetic field generated by the permanent magnetic means being alternately directed radially inwards to the centre of a middle-pole part or radially outwards from the centre of the middle-pole part,
• the intermediate part of the E of each of the various magnetic circuits (111) comprising cover means (127) of magnetisable material which abut on the side-pole parts (113.1, 113.2) and on the core, which cover means cover the part of the coil means located opposite to the free end of the middle-pole part (115) involved,
• the various coil means (125) arranged one behind the other allowing to be alternately switched in opposite directions, so that in one of the magnetic polarity directions of the switchable core means (121) a plurality of in essence closed permanent magnetic fields are present which in essence exclusively extend within the row of magnetic circuits (111) and in the other magnetic polarity direction a row of permanent magnetic brake fields of opposite polarity are provided which extend beyond the working area (119). [Figs. 6A - C]

9. A rail brake device (131) as claimed in claim 3 of a type that is suitable for cooperation of the working area with a surface of the rail (3) separated by an air gap by generation of eddy currents in the rail, **characterized by** the rail brake device (131) comprising a row of a plurality of mutually mechanically coupled, individual rail brake devices (133) arranged one behind the other in longitudinal direction. [Figs. 7 - 9]

10. A rail brake device as claimed in any one of the preceding claims, **characterized in that**
• the hard-magnetic material of the switchable core means in the permanent magnetizing state has a coercive field strength that exceeds 35ka/m and
• the lasting permanent magnetic means have a coercive field strength of significantly higher value.

11. A rail brake device as claimed in any one of the preceding claims, **characterized by**
• the rail brake device being resistant to leading a heating current through the coil means for a rather long period of time intended for combatting ice formation on the exterior of the rail brake device.

12. A rail brake device as claimed in any one of the preceding claims, **characterized by** the external contour of the cross section being situated within a 130 x 160 mm rectangle.

13. A rail brake device as claimed in any one of the preceding claims, **characterized by**
• this device being spring-suspended and
• the rail brake device allowing to be moved from an idle state at a distance from the rail as a result of an electrical current pulse passing through the coil means due to magnetic power.

14. A rail brake device as claimed in any one of the preceding claims, **characterized by** the rail brake device being resistant to an emergency brake current flowing through the coil means amplifying the magnetic brake field intended to amplify the braking force during use of the rail brake device as an emergency brake.

15. An arrangement movable along one or more rails such as a rail carriage, a lift, a hoisting device etc., **characterized in that** the arrangement comprises an electrically operable rail brake device (1; 23; 53; 71; 89; 109; 131) as claimed in one or more of the preceding claims 1 - 14.

## Patentansprüche

1. Elektrisch betreibbare Magnetschienenbremse (1; 23; 53; 71; 89; 109; 131), die für das magnetische Zusammenwirken während eines Bremszustandes mit einer Schiene (3) aus magnetisierbarem Material vorgesehen ist und die Folgendes umfasst:
• einen Magnetkreis (5; 25; 65; 73; 91; 111; 133; 149), der ein weichmagnetisches Material umfasst,
• Spulenelemente (7; 27; 57; 79.1, 79.2; 103; 125; 135; 151) aus elektrisch leitendem Material zur Erzeugung eines elektromagnetischen Feldes, wenn ein elektrischer Strom durch diese hindurch fließt,
• schaltbare magnetisierbare Kern-Elemente (9; 29; 55; 77.1, 77.2; 101; 121; 137; 153), welche einen Teil des Magnetkreises bilden und sich in den Spulenelementen (7; 27; 57; 79.1, 79.2; 103; 125; 135; 151) befinden, und
• eine Bremsfläche (11; 31; 97.1, 97.2, 99; 119; 139; 155), die auf die Schiene (3) gerichtet werden soll, wobei während des Bremszustandes, infolge des Durchflusses eines elektrischen Stromes durch die Spulenelemente (7; 27; 57; 79.1, 79.2; 103; 125; 135; 151), ein magnetisches Bremsfeld eingeschaltet wird, das sich über die Bremsfläche (11; 31; 97.1, 97.2, 99; 119; 139; 155) hinaus erstreckt und das über die Schiene (3) geschlossen werden kann, **dadurch gekennzeichnet, dass**
• die schaltbaren Kern-Elemente (9; 29; 55; 77.1, 77.2; 101; 121; 137; 153) ein hartmagnetisches Material umfassen,
• infolge des Durchflusses wenigstens eines elektrischen Magnetisierungsimpulses geeigneter Dauer und Stärke durch die Spulenelemente (7; 27; 57; 79.1, 79.2; 103; 125; 135; 151) die schaltbaren Kern-Elemente (9; 29; 55; 77.1, 77.2; 101; 121; 137; 153) bis zu einem permanent magnetisierenden Zustand permanent magnetisierbar sind und
• das magnetische Bremsfeld ein permanent magnetisches Bremsfeld umfasst, das in dem permanent magnetisierenden Zustand durch die schaltbaren Kern-Elemente (9; 29; 55; 77.1, 77.2; 101; 121; 137; 153) bereitgestellt wird.

2. Magnetschienenbremse nach Anspruch 1, **dadurch gekennzeichnet, dass**
• der Magnetkreis (5) in Querschnittsansicht im wesentlichen die Form eines U aufweist,
• der Verbindungsteil des U das Kern-Element (9) aus hartmagnetischem Material umfasst und das Spulenelement (7) hält,
• die Seitenteile des U weichmagnetische Seitenpolteile (15.1, 15.2), die an dem Kern-Element (9) anliegen, bilden und
• der gegenüber den freien Enden der Seitenpolteile (15.1, 15.2) liegende Teil des Spulenelementes (7) durch ein Abdeckelement (19) aus nicht magnetisierbarem Material abgedeckt ist. [Fig. 1A - B].

3. Magnetschienenbremse (23; 53; 71; 89; 109; 131) nach Anspruch 1, **dadurch gekennzeichnet, dass**
• die Magnetschienenbremse weiterhin dauerhaft permanentmagnetische Elemente (33; 61.2, 61.2; 83; 105.1, 105.2; 123.1, 123.2, 123.3, 123.4) umfasst, welche ein dauerhaft permanentmagnetisches Feld erzeugen, das eine bestimmte magnetische Polarität aufweist,
• der permanent magnetische Zustand der schaltbaren. Kern-Elemente (29; 55; 77.1, 77.2; 101; 121; 137; 153) in der Lage ist, eine erste magnetische Polaritätsrichtung und eine zweite, entgegen gesetzte, magnetische Polaritätsrichtung infolge von Stromimpulsen geeigneter elektrischer Polarität, die durch die Spulenelemente (27; 57; 79.1, 79.2; 103; 125; 135; 151) hindurch fließen, umzukehren und
• in einer der magnetischen Polaritätsrichtungen der schaltbaren Kern-Elemente (29; 55; 77.1, 77.2; 101; 121; 137; 153) ein geschlossenes permanentmagnetisches Feld vorliegt, das sich im wesentlichen ausschließlich innerhalb des Magnetkreises (25; 65; 73; 91; 111; 133; 149) erstreckt, und dass in der anderen magnetischen Polaritätsrichtung das permanentmagnetische Bremsfeld bereitgestellt wird, welches sich über die Bremsfläche (31; 97.1, 97.2, 99; 119; 139; 155) hinaus erstreckt.

4. Magnetschienenbremse (23) nach Anspruch 3, **dadurch gekennzeichnet, dass**
• der Magnetkreis (25) in der Querschnittsansicht die Form eines U mit einem Verbindungsteil und angrenzenden Seitenteilen mit einem freien Ende aufweist (41.1, 41.2),
• der Verbindungsteil des U das Kern-Element (29) aus hartmagnetischem Material umfasst und das Kern-Element hält,
• die Seitenteile des U weichmagnetische Seitenpolteile (43.1, 43.2) bilden, welche an das Kern-Element angrenzen,
• die dauerhaft permanentmagnetischen Elemente (33) zwischen den Seitenpolteilen (43.1, 43.2) und neben den Kern-Elementen (27) angeordnet sind und
• der Teil des Kern-Elementes, der sich gegenüber den freien Enden (41.1, 41.2) der Seitenpolteile (43.1, 43.2) befindet, durch ein Abdeckelement (47) aus nicht magnetisierbarem Material abgedeckt ist. [Fig. 2A - C].

5. Magnetschienenbremse (53) nach Anspruch 3, **dadurch gekennzeichnet, dass**
• der Magnetkreis in Querschnittsansicht im wesentlichen die Form eines U aufweist, das einen Verbindungsteil und zwei angrenzende Seitenteile mit einem freien Ende aufweist,
• der Verbindungsteil des U das Kern-Element (55) aus hartmagnetischem Material und das Spulenelement (57) umfasst,
• die Seitenteile des U weichmagnetische Seitenpolteile (59.1, 59.2) bilden, welche an das Kern-Element (55) angrenzen,
• das dauerhaft permanentmagnetische Element ein erstes und ein zweites dauerhaft permanentmagnetisches Element (61.1, 61.2) bilden, die sich an den Enden der mit dem Verbindungsteil verbundenen Seitenpolteile (59.1, 59.2) befinden, wobei sich diese Seitenpolteile an jeder der beiden Seiten des Spulenelementes (57) befinden,
• das erste und das zweite dauerhaft permanentmagnetische Element (61.1, 61.2) entgegen gesetzte Polaritätsrichtungen aufweisen, die im wesentlichen parallel zu der Richtung der Seitenpolteile sind, und
• der Zwischenteil des U ein Abdeckelement (63) aus magnetisierbarem Material umfasst, welches an das erste und das zweite dauerhaft permanentmagnetische Element (61.1, 61.2) angrenzt und den Teil des Spulenelementes (57) abdeckt, der sich gegenüber den freien Enden (69.1, 69.2) der Seitenpolteile (59.1, 59.2) befindet. [Fig. 3A - B]

6. Magnetschienenbremse (71) nach Anspruch 3, **dadurch gekennzeichnet, dass**
• der Magnetkreis (73) in Querschnittsansicht die Form eines U aufweist, das einen Verbindungsteil und zwei angrenzende Seitenteile mit einem freien Ende (75.1, 75.2) aufweist,
• das Kern-Element ein erstes und ein zweites Kern-Element (77.1, 77.2) aus hartelastischem Material umfasst,
• das Spulenelement ein erstes und ein zweites Spulenelement (79.1, 79.2) umfasst, die von dem ersten bzw. dem zweiten Kernelement getragen werden,
• die Seitenteile des U jeweils einen weichmagnetischen Seitenpolteil (81.1, 81.2) bilden, welcher an einen der beiden Kern-Elemente angrenzt,
• sich die Kern-Elemente (77.1, 77.2) jeweils im wesentlichen in Verlängerung eines Seitenpolteils (81.1, 81.2) erstrecken,
• sich das dauerhaft permanentmagnetische Element (83) zwischen den Seitenpolteilen (81.1, 81.2) erstreckt und
• der Zwischenteil des U ein Abdeckelement (63) aus magnetisierbarem Material umfasst, welches an das erste und das zweite Kern-Element (85) angrenzt und die Teile der Spulenelemente (79.1, 79.2) abdeckt, die sich gegenüber den freien Enden (75.1, 75.2) der Seitenpolteile befinden. [Fig. 4A - B]

7. Magnetschienenbremse (89) nach Anspruch 3, **dadurch gekennzeichnet, dass**
• der Magnetkreis (91) in Querschnittsansicht im wesentlichen die Form eines E aufweist, das einen Zwischenteil, zwei angrenzende Seitenteile mit einem freien Ende (97.1, 97.2) und einen sich dazwischen erstreckenden mittleren Teil mit einem freien Ende (99) umfasst,
• die Seitenteile des E weichmagnetische Seitenpolteile (93.1, 93.2) umfassen,
• der Zwischenteil des E einen weichmagnetischen Mittelpolteil (95) umfasst,
• das Kern-Element (101) aus hartmagnetischem Material, welches an den Mittelpolteil (95) angrenzt und sich in Verlängerung desselben auf der dem freien Ende (99) gegenüberliegenden Seite erstreckt, in Form eines Kerns vorliegt, der das Spulenelement (103) trägt,
• das dauerhaft permanentmagnetische Element ein erstes und ein zweites dauerhaft permanentmagnetisches Element (105.1, 105.2) auf den beiden Seiten des Mittelpolteils (95) umfasst, und zwar jeweils eines zwischen dem Mittelpolteil (95) und einem Seitenpolteil (93.1, 93.2), und
• der Zwischenteil des E ein Abdeckelement (107) aus magnetisierbarem Material umfasst, das an die Seitenpolteile (93.1, 93.2) und an den Kern (101) angrenzt und den Teil des Spulenelementes abdeckt, der sich gegenüber dem freien Ende (99) des Mittelpolteils (95) befindet. [Fig. 5A - B] .

8. Magnetschienenbremse (109) nach Anspruch 3, eines Typs, der für das Zusammenwirken der Bremsfläche mit einer Oberfläche der Schiene (3) geeignet ist, wobei diese Flächen aufgrund der Erzeugung von Wirbelströmen in der Schiene durch eine Luftspalte voneinander getrennt sind, **dadurch gekennzeichnet, dass**
• die Magnetschienenbremse (109) eine Reihe aus einer Mehrzahl von im wesentlichen identischen, miteinander mechanisch und magnetisch gekoppelten Magnetkreisen (111) umfasst, welche hintereinander in Längsrichtung angeordnet sind,
• jeder einzelne der Magnetkreise (111) in Querschnittsansicht im wesentlichen die Form eines E aufweist, welches einen Zwischenteil, zwei angrenzende seitliche Teile mit einem freien Ende (117.1, 117.2) und einen sich dazwischen erstreckenden mittleren Teil mit einem freien Ende (119), das sich bis zu den freien Enden (117.1, 117.2) der Seitenteile erstreckt, umfasst,
• die Seitenteile jedes E weichmagnetische Seitenpolteile (113.1, 113.2) bilden,
• der mittlere Teil jedes E einen weichmagnetischen Mittelpolteil (115) umfasst, welcher am freien Ende (119) eine partielle Bremsfläche bildet,
• die partiellen Bremsflächen der einzelnen Es zusammen die Bremsfläche der Magnetschienenbremse bilden,
• die Kern-Elemente (121) aus hartmagnetischem Material, welche an jeden einzelnen Mittelpolteil (115) angrenzen und sich in Verlängerung dieser Mittelpolteile auf der dem freien Ende (119) gegenüberliegenden Seite erstrecken, in Form eines Kerns vorliegen, welcher das Spulenelement (125) trägt,
• die dauerhaft permanentmagnetischen Elemente (123.1, 123.2, 123.3, 123.4) die einzelnen Mittelpolteile (115) umgeben und in der Reihe der Magnetkreise das von den permanentmagnetischen Elementen erzeugte permanentmagnetische Feld abwechselnd radial nach innen, zum Zentrum eines Mittelpolteils, oder vom Zentrum des Mittenpolteils aus radial nach außen gerichtet ist,
• der Zwischenteil des E jedes einzelnen der Magnetkreise (111) ein Abdeckelement (127) aus magnetisierbarem Material umfasst, das an die Seitenpolteile (113.1, 113.2) und an den Kern angrenzt und den Teil der Spulenelemente abdeckt, der sich gegenüber dem freien Ende des betreffenden Mittelpolteils (115) befindet,
• die einzelnen hintereinander angeordneten Spulenelemente (125) die abwechselnde Umschaltung derselben in entgegen gesetzte Richtungen erlauben, so dass in einer der magnetischen Polaritätsrichtungen der schaltbaren Kern-Elemente (121) eine Vielzahl von im wesentlichen geschlossenen permanentmagnetischen Feldern vorliegt, die sich im wesentlichen ausschließlich innerhalb der Reihe von Magnetkreisen (111) erstrecken, und in der anderen magnetischen Polaritätsrichtung eine Reihe permanentmagnetischer Bremsfelder entgegen gesetzter Polarität vorhanden ist, welche sich über die Bremsfläche hinaus erstrecken (119). [Fig. 6A - C].

9. Magnetschienenbremse (131) nach Anspruch 3, eines Typs, der sich für das Zusammenwirken der Bremsfläche mit einer Fläche der Schiene (3) eignet, wobei diese Flächen durch einen Luftspalt, der infolge der Erzeugung von Wirbelströmen in der Schiene entsteht, getrennt sind, **dadurch gekennzeichnet, dass** die Magnetschienenbremse (131) eine Reihe aus einer Mehrzahl von miteinander mechanisch gekoppelten, einzelnen Magnetschienenbremsen (133) umfasst, die in Längsrichtung hintereinander angeordnet sind. [Fig. 7 - 9]

10. Magnetschienenbremse nach einem der vorhergehenden Ansprüche, **dadurch gekennzeichnet, dass**
• das hartmagnetische Material der schaltbaren Kern-Elemente im permanentmagnetisierenden Zustand eine Koerzitivfeldstärke aufweist, die größer ist als 35 kA/m und
• die dauerhaften permanentmagnetischen Elemente eine Koerzitivfeldstärke aufweisen, deren Wert wesentlich höher liegt.

11. Magnetschienenbremse nach einem der vorhergehenden Ansprüche, **dadurch gekennzeichnet, dass**
• die Magnetschienenbremse gegen die Durchleitung eines Heizstroms durch die Spulenelemente über eine relativ lange Zeitspanne hinweg beständig ist, welcher einer Eisbildung auf dem Äußeren der Magnetschienenbremse entgegenwirken soll.

12. Magnetschienenbremse nach einem der vorhergehenden Ansprüche; **dadurch gekennzeichnet, dass** die Außenkontur des Querschnitts innerhalb eines 130 x 160 mm großen Rechtecks liegt.

13. Magnetschienenbremse nach einem der vorhergehenden Ansprüche, **dadurch gekennzeichnet, dass**
• die Magnetschienenbremse federnd aufgehängt ist und
• es die Magnetschienenbremse erlaubt, diese aus einem Ruhezustand in einem Abstand von der Schiene herauszubewegen, und zwar infolge eines elektrischen Stromimpulses, der aufgrund einer magnetischen Kraft durch die Spulenelemente fließt.

14. Magnetschienenbremse nach einem der vorhergehenden Ansprüche, **dadurch gekennzeichnet, dass** diese gegen das Fließen eines Notfall-Bremsstroms durch die Spulenelemente beständig ist, der das magnetische Bremsfeld, welches die Bremskraft erhöhen soll, während der Verwendung der Magnetschienenbremse als Notfallbremse verstärkt.

15. Anordnung, die entlang einer oder mehrerer Schienen beweglich ist, wie zum Beispiel ein Schienenfahrzeug, ein Aufzug, eine Hebevorrichtung etc., **dadurch gekennzeichnet, dass** die Anordnung eine elektrisch betreibbare Magnetschienenbremse (1; 23; 53; 71; 89; 109; 131) nach einem oder mehreren der vorhergehenden Ansprüche 1 - 14 umfasst.

## Revendications

1. Dispositif (1 ; 23 ; 53 ; 71 ; 89 ; 109 ; 131) de frein magnétique sur rail à mise en oeuvre électrique destiné, dans un état de freinage, à coopérer de façon magnétique avec un rail (3) d'une matière aimantable et incorporant :
- un circuit magnétique (5 ; 25 ; 65 ; 73 ; 91 ; 111 ; 133 ; 149) comprenant une matière magnétique douce ;
- un moyen (7 ; 27 ; 57 ; 79.1, 79.2 ; 103 ; 125 ; 135 ; 151) formant bobine d'une matière électriquement conductrice pour engendrer un champ électromagnétique lorsqu'un courant électrique le parcourt ;
- un moyen (9 ; 29 ; 55 ; 77.1, 77.2 ; 101 ; 121 ; 137 ; 153) formant noyau aimantable commutable appartenant au circuit magnétique et situé à l'intérieur du moyen (7 ; 27 ; 57 ; 79.1, 79.2 ; 103 ; 125 ; 135 ; 151) formant bobine ; et
- une zone (11 ; 31 ; 97.1, 97.2, 99 ; 119 ; 139 ; 155) de travail destinée à être dirigée vers un rail (3) ;
où, dans l'état de freinage, comme résultat de ce que le moyen (7 ; 27 ; 57 ; 79.1, 79.2 ; 103 ; 125 ; 135 ; 151) formant bobine est traversé par un courant électrique, il se crée un champ magnétique de frein qui s'étend au-delà de la zone (11 ; 31 ; 97.1, 97.2, 99 ; 119 ; 139 ; 155) de travail et qui peut se refermer via le rail (3), **caractérisé :**
- **en ce que** le moyen (9 ; 29 ; 55 ; 77.1, 77.2 ; 101 ; 121 ; 137 ; 153) formant noyau commutable comprend une matière magnétique dure ;
- **en ce que**, comme résultat de ce qu'au moins une impulsion électrique d'aimantation d'une durée et d'une force appropriées passe dans le moyen (7 ; 27 ; 57 ; 79.1, 79.2 ; 103 ; 125 ; 135 ; 151) formant bobine, le moyen (9 ; 29 ; 55 ; 77.1, 77.2 ; 101 ; 121 ; 137 ; 153) formant noyau commutable est aimantable de façon permanente jusqu'à un état d'aimantation permanent ; et
- **en ce que** le champ magnétique de frein comprend un champ magnétique permanent de frein qui est fourni par le moyen (9 ; 29 ; 55 ; 77.1, 77.2 ; 101 ; 121 ; 137 ; 153) formant noyau commutable dans l'état d'aimantation permanent.

2. Dispositif de frein sur rail selon la revendication 1, **caractérisé :**
- **en ce que** le circuit magnétique (5) vue en coupe transversale a, essentiellement, la forme d'un U ;
- **en ce que** la branche de liaison du U comprend le moyen (9) formant noyau en matière magnétique dure et supporte le moyen (7) formant bobine ;
- **en ce que** les branches latérales du U forment des pièces polaires latérales magnétiques douces (15.1, 15.2) aboutissant au moyen (9) formant noyau ; et
- **en ce que** la partie du moyen (7) formant bobine située à l'opposé des extrémités libres des pièces polaires latérales (15.1, 15.2) est recouverte par un moyen (19) de recouvrement d'une matière non aimantable. [Figures 1A - B].

3. Dispositif (23 ; 53 ; 71 ; 89 ; 109 ; 131) de frein sur rail selon la revendication 1, **caractérisé :**
- **en ce que** le dispositif de frein sur rail comprend aussi un moyen magnétique permanent durable (33 ; 61.2, 61.2 ; 83 ; 105.1, 105.2 ; 123.1, 123.2, 123.3, 123.4) qui engendre un champ magnétique permanent durable ayant une polarité magnétique donnée ;
- **en ce que** l'état magnétique permanent du moyen (29 ; 55 ; 77.1, 77.2 ; 101 ; 121 ; 137 ; 153) formant noyau commutable est capable d'inversion entre un premier sens de polarité magnétique et un second sens, opposé, de polarité magnétique, en résultat d'impulsions de courant d'une polarité électrique appropriée passant dans le moyen (27 ; 57 ; 79.1, 79.2 ; 103 ; 125 ; 135 ; 151) formant bobine ; et
- **en ce qu'**un champ magnétique permanent fermé est présent dans l'un des sens de polarité magnétique du moyen (29 ; 55 ; 77.1, 77.2 ; 101 ; 121 ; 137 ; 153) formant noyau commutable, lequel champ magnétique permanent, essentiellement, s'étend exclusivement à l'intérieur du circuit magnétique (25 ; 65 ; 73 ; 91 ; 111 ; 133 ; 149) et en ce que dans l'autre sens de polarité magnétique, se crée le champ magnétique permanent de frein qui s'étend au-delà de la zone (31 ; 97.1, 97.2, 99 ; 119 ; 139 ; 155) de travail.

4. Dispositif (23) de frein sur rail selon la revendication 3, **caractérisé :**
- **en ce que** le circuit magnétique (25), vu en coupe transversale, a la forme d'un U avec une branche de liaison et, y aboutissant, des branches latérales ayant une extrémité libre (41.1, 41.2) ;
- **en ce que** la branche de liaison du U comprend le moyen (29) formant noyau en matière magnétique dure et supporte le moyen formant noyau ;
- **en ce que** les branches latérales du U forment des pièces polaires latérales magnétiques douces (43.1, 43.2) qui aboutissent au moyen formant noyau ;
- **en ce que** le moyen magnétique permanent durable (33) est situé entre les pièces polaires latérales (43.1, 43.2) et à côté du moyen (27) formant noyau ; et
- **en ce que** la partie du moyen formant noyau située à l'opposé des extrémités libres (41.1, 41.2) des pièces polaires latérales (43.1, 43.2) est recouverte par un moyen (47) de recouvrement d'une matière non aimantable. [Figures 2A à C]

5. Dispositif (53) de frein sur rail selon la revendication 3, **caractérisé :**
- **en ce que** le circuit magnétique, vu en coupe transversale, a, essentiellement, la forme d'un U avec une branche de liaison et, y aboutissant, deux branches latérales ayant une extrémité libre ;
- **en ce que** la branche de liaison du U comprend le moyen (55) formant noyau en matière magnétique dure et le moyen (57) formant bobine ;
- **en ce que** les branches latérales du U forment des pièces polaires latérales magnétiques douces (59.1, 59.2) qui aboutissent au moyen (55) formant noyau ;
- **en ce que** le moyen magnétique permanent durable comprend des premier et second moyens magnétiques permanents durables (61.1, 61.2) qui sont situés aux extrémités des pièces polaires latérales (59.1, 59.2) raccordées à la branche de liaison, lesquelles pièces polaires latérales sont situées sur chacun des deux côtés du moyen (57) formant bobine ;
- **en ce que** les premier et second moyens magnétiques permanents durables (61.1, 61.2) ont des sens de polarité opposés, essentiellement parallèles à la direction des pièces polaires latérales ; et
- **en ce que** la branche intermédiaire du U comprend un moyen (63) de recouvrement d'une matière non aimantable qui aboutit aux premier et second moyens magnétiques permanents durables (61.1, 61.2), qui recouvrent la partie du moyen (57) formant bobine située à l'opposé des extrémités libres (69.1, 69.2) des pièces polaires latérales (59.1, 59.2). [Figures 3A - B].

6. Dispositif (71) de frein sur rail selon la revendication 3, **caractérisé :**
- **en ce que** le circuit magnétique (73), vu en coupe transversale, a la forme d'un U avec une branche de liaison et, y aboutissant, deux branches latérales ayant une extrémité libre (75.1, 75.2) ;
- **en ce que** le moyen formant noyau comprend des premier et second moyens (77.1, 77.2) formant noyaux en matière magnétique dure ;
- **en ce que** le moyen formant bobine comprend des premier et second moyens (79.1, 79.2) formant bobines supportés, respectivement, par les premier et second moyens formant noyaux ;
- **en ce que** les branches latérales du U forment chacune une pièce polaire latérale magnétique douce (81.1, 81.2) qui aboutit à l'un des deux moyens formant noyaux ;
- **en ce que** les moyens (77.1, 77.2) formant noyaux s'étendent chacun, essentiellement, en prolongement d'une pièce polaire latérale (81.1, 81.2) ;
- **en ce que** le moyen magnétique permanent durable (83) s'étend entre les pièces polaires latérales (81.1, 81.2) ; et
- **en ce que** la branche intermédiaire du U comprend un moyen de recouvrement d'une matière aimantable qui aboutit aux premier et second moyens (85) formant noyaux, lequel moyen de recouvrement recouvre des parties des deux moyens (79.1, 79.2) formant bobines situées à l'opposé des extrémités libres (75.1, 75.2) des pièces polaires latérales. [Figures 4A - B].

7. Dispositif (89) de frein sur rail selon la revendication 3, **caractérisé :**
- **en ce que** le circuit magnétique (91), vu en coupe transversale, a, essentiellement, la forme d'un E avec une branche intermédiaire, deux branches latérales y aboutissant ayant une extrémité libre (97.1, 97.2) et une partie centrale s'étendant entre elles ayant une extrémité libre (99) ;
- **en ce que** les branches latérales du E forment des pièces polaires latérales magnétiques douces (93.1, 93.2) ;
- **en ce que** la branche intermédiaire du E comprend une pièce polaire centrale magnétique douce (95) ;
- **en ce que** le moyen (101) formant noyau, d'une matière magnétique dure, aboutissant à, et en prolongement de, la pièce polaire centrale (95) et du côté opposé à l'extrémité libre (99), est présent sous la forme d'un noyau qui supporte le moyen (103) formant bobine ;
- **en ce que** le moyen magnétique permanent durable comprend des premier et second moyens magnétiques permanents durables (105.1, 105.2) de chacun des deux côtés de la pièce polaire centrale (95), chaque fois entre la pièce polaire centrale (95) et une pièce polaire latérale (93.1, 93.2) ; et
- **en ce que** la branche intermédiaire du E comprend un moyen (107) de recouvrement, d'une matière aimantable, qui aboutit aux pièces polaires latérales (93.1, 93.2) et au noyau (101), lequel moyen de recouvrement recouvre la partie du moyen formant bobine située à l'opposé de l'extrémité libre (99) de la pièce polaire centrale (95). [Figures 5A - B].

8. Dispositif (109) de frein sur rail selon la revendication 3, d'un type approprié pour la coopération de la zone de travail avec une surface du rail (3) séparées par un entrefer par la création de courants de Foucault dans le rail, **caractérisé :**
- **en ce que** le dispositif (109) de frein sur rail comprend une rangée d'une pluralité de circuits magnétiques (111) mutuellement couplés mécaniquement et magnétiquement, essentiellement identiques, agencés l'un derrière l'autre dans la direction longitudinale ;
- **en ce que** chacun de la pluralité de circuits magnétiques (111), vu en coupe transversale, a, essentiellement, la forme d'un E avec une branche intermédiaire, deux branches latérales y aboutissant ayant une extrémité libre (117.1, 117.2) et une branche centrale s'étendant entre elles, ayant une extrémité libre (119) qui s'étend aussi loin que les extrémités libres (117.1, 117.2) des branches latérales ;
- **en ce que** les branches latérales de chaque E forment des pièces polaires latérales magnétiques douces (113.1, 113.2) ;
- **en ce que** la branche centrale de chaque E comprend une pièce polaire centrale magnétique douce (115) qui forme une zone partielle de travail à l'extrémité libre (119) ;
- **en ce que** les zones partielles de travail des divers E forment ensemble la zone de travail du dispositif de frein sur rail ;
- **en ce qu'**un moyen (121) formant noyau, d'une matière magnétique dure, aboutissant à, et comme prolongement de, chaque pièce polaire centrale (115) et du côté opposé à l'extrémité libre (119), est présent sous la forme d'un noyau qui supporte un moyen (125) formant bobine ;
- **en ce que** le moyen magnétique permanent durable (123.1, 123.2, 123.3, 123.4) entoure les diverses pièces polaires centrales (115) de la rangée de circuits magnétiques, le champ magnétique permanent engendré par le moyen magnétique permanent étant dirigé alternativement radialement vers l'intérieur jusqu'au centre de la pièce polaire centrale ou radialement vers l'extérieur à partir du centre de la pièce polaire centrale ;
- **en ce que** la branche intermédiaire du E de chacun des divers circuits magnétiques (111) comprend un moyen (127) de recouvrement d'une matière aimantable qui aboutit aux pièces polaires latérales (113.1, 113.2) et au noyau, lequel moyen de recouvrement recouvre la partie du moyen formant bobine située à l'opposé de l'extrémité libre de la pièce polaire centrale (115) impliquée ;
- **en ce que** les divers moyens (125) formant bobines agencés l'un derrière l'autre peuvent être commutés alternativement en sens contraire, de sorte que, dans l'un des sens de polarité magnétique du moyen (121) formant noyau commutable, il y a une pluralité de champs magnétiques permanents essentiellement fermés qui, essentiellement, s'étendent exclusivement à l'intérieur de la rangée de circuits magnétiques (111) et que, dans l'autre sens de polarité magnétique, il est créée une rangée de champs magnétiques permanents de frein de polarité opposée qui s'étendent au-delà de la zone (119) de travail. [Figures 6A à C].

9. Dispositif (131) de frein sur rail selon la revendication 3, d'un type qui est approprié pour la coopération de la zone de travail avec une surface du rail (3) séparées par un entrefer par la création de courants de Foucault dans le rail, **caractérisé en ce que** le dispositif (131) de frein sur rail comprend une rangée d'une pluralité de dispositifs individuels (133) de frein sur rail, mutuellement couplés mécaniquement, agencés l'un derrière l'autre dans la direction longitudinale. [Figures 7 à 9].

10. Dispositif de frein sur rail selon l'une quelconque des revendications précédentes, **caractérisé :**
- **en ce que** la matière magnétique dure du moyen formant noyau commutable dans l'état d'aimantation permanent a une intensité de champ coercitif qui dépasse 35 ka/m ; et
- **en ce que** les moyens magnétiques permanents durables ont une intensité de champ coercitif d'une valeur sensiblement plus élevée.

11. Dispositif de frein sur rail selon l'une quelconque des revendications précédentes, lequel étant **caractérisé en ce qu'**il est résistant pour conduire un courant de chauffage parcourant le moyen formant bobine pendant une période de temps plutôt longue dans le but de combattre la formation de glace sur l'extérieur du dispositif de frein sur rail.

12. Dispositif de frein sur rail selon l'une quelconque des revendications précédentes, **caractérisé en ce que** le contour externe de la section transversale est situé à l'intérieur d'un rectangle de 130 x 160 mm.

13. Dispositif de frein sur rail selon l'une quelconque des revendications précédentes, lequel étant
**caractérisé :**
- **en ce qu'**il est suspendu sur ressorts ; et
- **en ce qu'**il peut être déplacé à partir d'un état de repos à une certaine distance du rail en résultat d'une impulsion de courant électrique parcourant le moyen formant bobine en raison de la puissance magnétique.

14. Dispositif de frein sur rail selon l'une quelconque des revendications précédentes, lequel étant **caractérisé en ce qu'**il est résistant à un courant de frein de secours circulant dans le moyen formant bobine en amplifiant le champ magnétique de frein dans le but d'amplifier la force de freinage pendant l'utilisation du dispositif de frein sur rail comme frein de secours.

15. Agencement mobile le long d'un ou plusieurs rails tel qu'un véhicule ferroviaire, un ascenseur, un dispositif de levage etc., l'agencement étant **caractérisé en ce qu'**il comprend un dispositif (1 ; 23 ; 53 ; 71 ; 89 ; 109 ; 131) de frein sur rail à mise en oeuvre électrique selon une ou plusieurs des revendications 1 à 14 précédentes.
